(19) Europäisches Patentamt
European Patent Office
Office européen des brevets

(11) Veröffentlichungsnummer : **0 094 020**
**B1**

(12) # EUROPÄISCHE PATENTSCHRIFT

(45) Veröffentlichungstag der Patentschrift : **10.09.86**

(21) Anmeldenummer : **83104368.2**

(22) Anmeldetag : **04.05.83**

(51) Int. Cl.⁴ : **C 09 B 62/09**, C 09 B 62/513, D 06 P 3/66, D 06 P 3/10

(54) **Wasserlösliche Disazoverbindungen, Verfahren zu ihrer Herstellung und ihre Verwendung als Farbstoffe.**

(30) Priorität : **08.05.82 DE 3217388**

(43) Veröffentlichungstag der Anmeldung : **16.11.83 Patentblatt 83/46**

(45) Bekanntmachung des Hinweises auf die Patenterteilung : **10.09.86 Patentblatt 86/37**

(84) Benannte Vertragsstaaten : **BE CH DE FR GB IT LI**

(56) Entgegenhaltungen :
**FR-A- 2 437 426**
**JP-A-56 128 380**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Meininger, Fritz, Dr.**
**Loreleistrasse 7**
**D-6230 Frankfurt am Main 80 (DE)**
Erfinder : **Schläfer, Ludwig, Dr.**
**Königsberger Strasse 40**
**D-6233 Kelkheim (Taunus) (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung liegt auf dem Gebiet der faserreaktiven Disazofarbstoffe.

Aus den Europäischen Patentanmeldungs-Veröffentlichungen Nrs. 0 022 265 A und 0 048 355 A sind faserreaktive Disazofarbstoffe bekannt, die aus der 1-Amino-8-naphthol-3,6- oder -4,6-disulfonsäure als bivalenter Kupplungskomponente, einer auf dieser sauer angekuppelten Anilin- oder Aminonaphthalinverbindung als erste Diazokomponente und einer Phenylendiamin-sulfonsäure-Verbindung als zweite Diazokomponente, an deren zweiter Aminogruppe ein mit einem faserreaktiven Anilinrest der Vinylsulfonreihe verbundener Chlortriazinylrest gebunden ist, aufgebaut sind. Ebenso sind aus der japanischen Patentanmeldungs-Veröffentlichung Sho-46-128 380 mit den Beispielen 19 ff. faserreaktive Disazofarbstoffe beschrieben, die aus der obengenannten bivalenten Kupplungskomponente, einer 1,3-Phenylendiamin-6-sulfonsäure als erste Diazokomponente, an deren zweiter Aminogruppe ein mit einem faserreaktiven Anilinrest der Vinylsulfonreihe verbundener Halogentriazinylrest gebunden ist, und einer Aminonaphthalinverbindung als zweite Diazokomponente aufgebaut sind.

Es wurden nunmehr neue, wertvolle und vorteilhafte wasserlösliche Disazoverbindungen gefunden, die die allgemeine Formel (1)

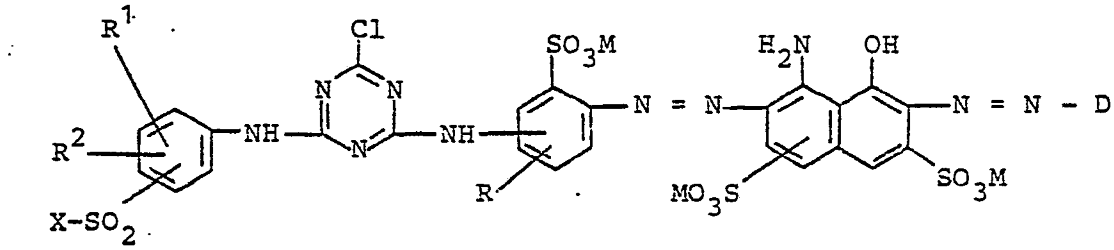 (1)

besitzen. In dieser bedeuten :

Die Formelglieder $R^1$, $R^2$, R und die Substituenten in D können zueinander gleiche oder voneinander verschiedene Bedeutungen besitzen ;

D ist der Phenylrest, der durch 1, 2 oder 3 Substituenten aus der Gruppe Alkyl von 1 bis 4 C-Atomen, wie Äthyl und insbesondere Methyl, Alkoxy von 1 bis 4 C-Atomen, wie Äthoxy und insbesondere Methoxy, Halogen, wie Chlor, Brom und Fluor, Trichlormethyl, Trifluormethyl, Nitro, Alkanoylamino mit 1 bis 4 C-Atomen im Alkylrest, wie Acetylamino und Propionylamino, Benzoylamino (das im Benzolkern durch einen oder zwei Substituenten aus der Gruppe Methyl, Äthyl, Methoxy, Äthoxy, Chlor und Sulfo substituiert sein kann), Phenylsulfonylamino (das im Phenylrest durch einen oder zwei Substituenten aus der Gruppe Methyl, Äthyl, Methoxy und Äthoxy substituiert sein kann, wie p-Toluolsulfonylamino), Carboxy und Sulfo substituiert sein kann, wobei dieser Phenylrest D bevorzugt mindestens eine Sulfogruppe oder Carboxygruppe als Substituenten enthält, oder

D ist ein Naphthylrest, der durch 1, 2 oder 3 Sulfogruppen substituiert ist ;

$R^1$ und $R^2$ bedeuten jedes ein Wasserstoffatom eine Alkylgruppe von 1 bis 4 C-Atomen, wie beispielsweise die Äthylgruppe und insbesondere die Methylgruppe, eine Alkoxygruppe von 1 bis 4 C-Atomen, wie beispielsweise die Äthoxygruppe und insbesondere die Methoxygruppe, oder ein Chloratom ;

R ist ein Wasserstoffatom oder eine Alkylgruppe von 1 bis 4 C-Atomen, wie beispielsweise die Äthylgruppe und insbesondere die Methylgruppe, eine Alkoxygruppe von 1 bis 4 C-Atomen, wie beispielsweise die Äthoxygruppe und insbesondere die Methoxygruppe, oder eine Sulfogruppe, jedoch zwingend eine Alkylgruppe von 1 bis 4 C-Atomen oder eine Alkoxygruppe von 1 bis 4 C-Atomen oder eine Sulfogruppe, wenn die Aminogruppe —NH— an diesen Benzolkern in para-Stellung zur angegebenen Sulfogruppe $—SO_3M$ gebunden ist und D gleichzeitig einen durch Sulfo substituierten Naphthylrest bedeutet ;

X ist die Vinylgruppe oder eine β-Sulfatoäthyl-Gruppe ;

M ist ein Wasserstoffatom oder das Äquivalent eines Metalls, vorzugsweise eines ein- oder zweiwertigen Metalls, wie Alkali- oder Erdalkalimetalls, insbesondere des Natriums, Kaliums oder Calciums.

Eine Carboxygruppe ist eine Gruppe entsprechend der allgemeinen Formel —COOM, eine Sulfogruppe eine Gruppe entsprechend der allgemeinen Formel $—SO_3M$ und eine Sulfatogruppe eine Gruppe entsprechend der allgemeinen Formel $—OSO_3M$, in welchen jeweils M die obengenannte Bedeutung besitzt.

Die erfindungsgemäßen Azoverbindungen können in Form ihrer freien Säure und bevorzugt in Form ihrer Salze, insbesondere neutralen Salze, vorliegen ; als Salze sind insbesondere die Alkalimetall- und Erdalkalimetallsalze zu nennen, so beispielsweise die Natrium-, Kalium- und Calciumsalze. Die neuen Verbindungen finden bevorzugt in Form dieser Salze ihre Verwendung zum Färben (im allgemeinen Sinne und einschließlich des Bedruckens verstanden) von hydroxy- und/oder carbonamidgruppenhaltigem Material, insbesondere Fasermaterial.

Die vorliegende Erfindung betrifft weiterhin ein Verfahren zur Herstellung dieser erfindungsgemäßen Disazoverbindungen. Dieses ist dadurch gekennzeichnet, daß man eine Monoazoverbindung der allgemeinen Formel (2)

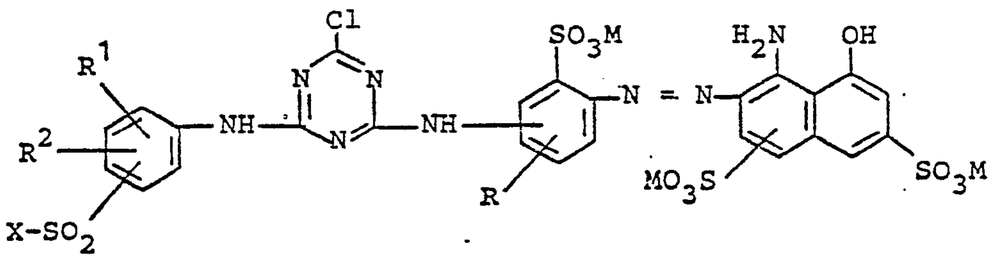

(2)

in welcher $R^1$, $R^2$, R, D, M und X die obengenannten Bedeutungen haben, mit dem Diazoniumsalz einer Aminoverbindung der allgemeinen Formel (3)

$$H_2N—D \quad (3)$$

in welcher D die obengenannte Bedeutung besitzt, kuppelt.

Die Kupplungsreaktion nach dem erfindungsgemäßen Verfahren erfolgt analog bekannten Verfahrensweisen, so beispielsweise in wäßrigem Medium im schwach sauren bis schwach alkalischen Bereich, so bei einem pH-Wert zwischen 3 und 9 und bevorzugt zwischen 4 und 7.

Die als Ausgangsverbindung dienende Monoazoverbindung der allgemeinen Formel (2) kann in erfindungsgemäßer Weise durch Umsetzung des Diazoniumsalzes einer Aminoverbindung der allgemeinen Formel (4)

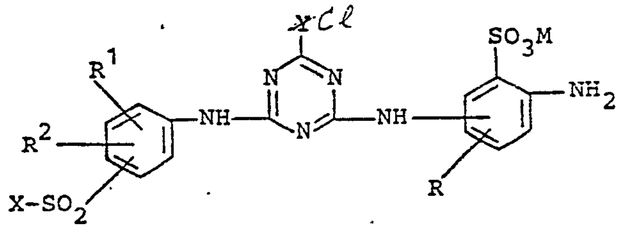

(4)

in welcher $R^1$, $R^2$, R, M und X die obengenannten Bedeutungen haben, mit der 1-Amino-8-naphthol-3,6- oder -4,6-disulfonsäure in saurem, vorzugsweise wäßrigem Medium, so bei einem pH-Wert zwischen 0 und 3, hergestellt werden. Die Diazotierung des Amins der allgemeinen Formel (4) und die sauer ausgeführte Kupplungsreaktion kann analog altbekannten Verfahrensweisen erfolgen.

Die als Ausgangsverbindungen dienenden Aminoverbindungen der allgemeinen Formel (4) lassen sich analog bekannten, beispielsweise in den Europäischen Patentanmeldungs-Veröffentlichungen Nrs. 0 032 187, 0 036 133 und 0 036 582 beschriebenen Verfahrensweisen durch Umsetzung von Cyanurchlorid zunächst mit einer Aminoverbindung der allgemeinen Formel (5)

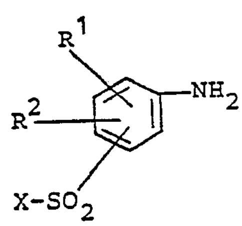

(5)

in welcher $R^1$, $R^2$ und X die obengenannten Bedeutungen haben, und anschließend mit einer Phenylendiamino-Verbindung der allgemeinen Formel (6)

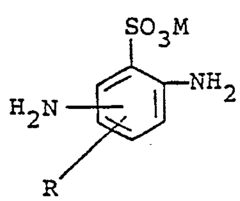

(6)

in welcher M und R die obengenannten Bedeutungen haben, herstellen.

So kann beispielsweise die Umsetzung des Cyanurchlorids in der ersten Kondensationsstufe mit dem Amin der allgemeinen Formel (5) in wäßrigem Medium oder wäßrig-organischem Medium unter Zusatz säurebindender Mittel, wie Alkali- oder Erdalkalicarbonaten, Alkali- oder Erdalkalihydrogencarbonaten oder -hydroxyden oder Alkaliacetaten, — wobei die Alkali- und Erdalkalimetalle vorzugsweise solche des Natriums, Kaliums und Calciums sind —, und ebenso beispielsweise tertiäre Amine, wie Pyridin, Triäthylamin oder Chinolin, erfolgen. Als Reaktionstemperatur zur Herstellung dieses primären Kondensationsproduktes wählt man den Bereich zwischen —10 °C und + 40 °C, vorzugsweise zwischen —10 °C und + 30 °C, insbesondere bevorzugt zwischen 0 °C und + 10 °C, bei einem pH-Wert zwischen 0,7 und 5, vorzugsweise zwischen 1 und 3.

Die zweite Kondensationsstufe zwischen der Dichlortriazinylamino-Verbindung und der Phenylendiamino-Verbindung der allgemeinen Formel (6) kann ebenso in wäßrig-organischem Medium erfolgen ; vorzugsweise führt man sie jedoch in wäßrigem Medium durch, wobei erforderlichenfalls ein säurebindendes Mittel, wie die oben angegebenen, zugesetzt wird. Als Reaktionstemperatur wählt man vorzugsweise einen Bereich zwischen 10 und 60 °C, insbesondere bevorzugt zwischen 20 und 50 °C, bei einem pH-Wert zwischen 2 und 8, insbesondere zwischen 3 und 6.

Die Aminoverbindungen der Formeln (5) und (6) können aber auch in umgekehrter Reihenfolge mit Cyanurchlorid zu Verbindungen der Formel (4) umgesetzt werden.

Als organisches Lösemittel bei diesen Kondensationsreaktionen kann zum Beispiel Aceton verwendet werden, in dem das Cyanurchlorid bereits gelöst ist ; es kann aber auch auf organische Lösemittel verzichtet werden.

Aminoverbindungen der allgemeinen Formel (3), die als Ausgangsverbindungen zur Herstellung der erfindungsgemäßen Disazoverbindungen dienen können, sind beispielsweise 2-Chloranilin, 2,4-Dichloranilin, 2-Carboxy-anilin, 3-Carboxy-anilin, 4-Chloranilin-2-sulfonsäure, 2-Chloranilin-4-sulfonsäure, 6-Chlor-3-aminotoluol-4-sulfonsäure, 2,5-Dichloranilin-4-sulfonsäure, 2,5-Dimethoxyanilin-4-sulfonsäure, 4-Nitro-anilin, 4-Acetylamino-anilin-2-sulfonsäure und 3-Acetylamino-anilin-6-sulfonsäure sowie bevorzugt Anilin-2-sulfonsäure, Anilin-4-sulfonsäure, Anilin-2,4-disulfonsäure und Anilin-2,5-disulfonsäure, weiterhin von den Naphthylaminen beispielsweise die 1-Aminonaphthalin-4-sulfonsäure, 2-Aminonaphthalin-5-sulfonsäure, 2-Aminonaphthalin-6-sulfonsäure, 2-Aminonaphthalin-7-sulfonsäure, 2-Aminonaphthalin-3,6-disulfonsäure, 2-Aminonaphthalin-4,8-disulfonsäure und 2-Aminonaphthalin-3,6,8-trisulfonsäure und bevorzugt die 2-Aminonaphthalin-1-sulfonsäure und die 2-Aminonaphthalin-1,5-disulfonsäure.

Aminoverbindungen der allgemeinen Formel (5) sind beispielsweise 3-(β-Sulfatoäthylsulfonyl)-anilin, 3-Vinylsulfonyl-anilin, 2-Methoxy-5-(β-sulfatoäthylsulfonyl)-anilin, 2-Methoxy-5-vinylsulfonyl-anilin, 2,5-Dimethoxy-4-(β-sulfatoäthylsulfonyl)-anilin und dessen Vinylsulfonylderivat, 2-Methoxy-4-(β-sulfatoäthylsulfonyl)-anilin und dessen Vinylsulfonylderivat, 4-Methoxy-5-(β-sulfatoäthylsulfonyl)-anilin und dessen Vinylsulfonylderivat, 2,4-Dimethoxy-5-β-sulfatoäthylsulfonyl-anilin und dessen Vinylsulfonylderivat, 2-Methoxy-5-methyl-4-(β-sulfatoäthylsulfonyl)-anilin und dessen Vinylsulfonylderivat, 2-Methoxy-5-chlor-4-(β-sulfatoäthylsulfonyl)-anilin und dessen Vinylsulfonylderivat, bevorzugt jedoch das 4-(β-Sulfatoäthylsulfonyl)-anilin und das 4-Vinylsulfonyl-anilin.

Phenylendiamino-Verbindungen der allgemeinen Formel (6) sind beispielsweise die 1,4-Diaminobenzol-2,5-disulfonsäure, die 1,4-Diaminobenzol-2,6-disulfonsäure, 2,5-Diaminotoluol-4-sulfonsäure, 2,4-Diaminotoluol-5-sulfonsäure, 2,5-Diamino-anisol-4-sulfonsäure und die 2,4-Diamino-anisol-5-sulfonsäure, bevorzugt jedoch die 1,3-Diaminobenzol-4-sulfonsäure und die 1,4-Diaminobenzol-5-sulfonsäure.

Von den erfindungsgemäßen Verbindungen sind diejenigen bevorzugt, in denen die Gruppe der Formel $—SO_2—X$ in meta-Stellung, insbesondere in para-Stellung zur Aminogruppe an den Benzolkern gebunden ist. Weiterhin sind diejenigen erfindungsgemäßen Verbindungen bevorzugt, in denen der Formelrest X für die β-Sulfatoäthyl-Gruppe steht.

Weiterhin ist in den Disazoverbindungen der allgemeinen Formel (1) das Formelglied $R^1$ bevorzugt ein Wasserstoffatom oder die Methylgruppe oder die Methoxygruppe oder ein Chloratom, $R^2$ bevorzugt ein Wasserstoffatom, die Methylgruppe oder die Methoxygruppe und R bevorzugt ein Wasserstoffatom oder eine Sulfogruppe.

Weiterhin ist in den erfindungsgemäßen Verbindungen der Formelrest D bevorzugt ein Phenylrest, der durch einen, zwei oder drei Substituenten substituiert ist, die aus der Menge von 2 Alkoxygruppen von 1 bis 4 C-Atomen, 2 Alkylgruppen von 1 bis 4 C-Atomen, 2 Chloratomen, 1 Bromatom, 1 Fluoratom, 1 Trichlormethylgruppe, 1 Trifluormethylgruppe, 1 Alkanoylaminogruppe mit 1 bis 4 C-Atomen im Alkylrest, 1 Nitrogruppe, 1 Carboxygruppe und 2 Sulfogruppen ausgewählt sind. Insbesondere bevorzugt ist D der Phenylrest, der durch 1, 2 oder 3 Substituenten substituiert ist, die aus der Menge von 2 Alkoxygruppen, wie insbesondere Methoxygruppen, 2 Chloratomen, 2 Sulfogruppen, 1 Carboxygruppe, 1 Nitrogruppe, 1 Alkylgruppe von 1 bis 4 C-Atomen, wie insbesondere Methylgruppe, und 1 Acetylaminogruppe ausgewählt sind. Insbesondere ist D der Phenylrest, der durch eine oder zwei Sulfogruppen substituiert ist.

Weiterhin ist bevorzugt D der Naphthylrest, der durch 1, 2 oder 3 Sulfogruppen substituiert ist.

Als Einzelverbindungen können insbesondere die in den Beispielen 1 bis 9 und 13 beschriebenen erfindungsgemäßen Disazoverbindungen hervorgehoben werden.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz, wie beispielsweise ein Gemisch aus Mono- und Dinatriumphosphat, zugefügt werden kann. Gegebenenfalls können diese Syntheselösungen auch, gegebenenfalls nach Zusatz einer Puffersubstanz und nach eventuellem Konzentrieren, direkt als Flüssigpräparation der färberischen Verwendung zugeführt werden.

Die erfindungsgemäßen Disazoverbindungen besitzen wertvolle Farbstoffeigenschaften, die infolge der Vinylsulfonyl- bzw. β-Sulfatoäthylsulfonyl-Gruppe und des Halogenotriazinyl-Restes faserreaktive Eigenschaften aufweisen. Die neuen Verbindungen werden bevorzugt zum Färben (im allgemeinen Sinne, einschließlich des Bedruckens) von hydroxy- und/oder carbonamidgruppenhaltigen Materialien, beispielsweise in Form von Flächengebilden, wie Papier und Leder oder von Folien, wie bspw. aus Polyamid, oder in der Masse, wie beispielsweise von Polyamid und Polyurethan, insbesondere aber von diesen Materialien in Faserform, verwendet. Die vorliegende Erfindung betrifft somit auch die Verwendung der Verbindungen der allgemeinen Formel (1) zum Färben (im obigen Sinne) dieser Materialien bzw. Verfahren zum Färben solcher Materialien in an und für sich üblichen Verfahrensweisen, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern, wie Garnen, Wickelkörpern, Geweben und Gewirken.

Hydroxygruppenhaltige Materialien sind natürliche, regenerierte oder synthetische hydroxygruppenhaltige Materialien, wie beispielsweise Cellulosefasermaterialien oder Celluloseregeneratmaterialien und Polyvinylalkohole. Cellulosefasermaterialien sind vorzugsweise Baumwolle, aber auch andere Pflanzenfasern, wie Leinen, Hanf, Jute und Ramiefasern ; regenerierte Cellulosefasern sind beispielsweise Zellwolle und Viskosekunstseide.

Carbonamidgruppenhaltige Materialien sind beispielsweise synthetische Polyamide, wie Polyamid-6,6, Polyamid-6, Polyamid-11 und Polyamid-4, und Polyurethane, insbesondere in Form der Fasern, oder natürliche Polyamide, beispielsweise Wolle und andere Tierhaare, Seide und Leder.

Die erfindungsgemäßen Disazoverbindungen lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren.

So erhält man mit ihnen auf Cellulosefasern nach dem Ausziehverfahren unter Verwendung von verschiedensten säurebindenden Mitteln und gegebenenfalls unter Zugabe von neutralen Salzen, wie Natriumchlorid oder Natriumsulfat, sehr gute Farbausbeuten sowie einen ausgezeichneten Farbaufbau. Man färbt bei Temperaturen zwischen 30 und 105 °C, vorzugsweise zwischen 60 und 100 °C, gegebenenfalls bei Temperaturen bis zu 120 °C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten erhalten, wobei durch Verweilen bei Raumtemperatur oder erhöhter Temperatur, beispielsweise bis zu 60 °C, durch Dämpfen oder durch Trockenhitze in üblicher Weise fixiert werden kann.

Ebenfalls nach den üblichen Druckverfahren für Cellulosefasern, die einphasig — beispielsweise durch Bedrucken mit einer Natriumbicarbonat oder ein anderes säurebindendes Mittel enthaltenden Druckpaste und anschließendes Dämpfen bei 100-103 °C, — oder zweiphasig — beispielsweise durch Bedrucken mit neutraler oder schwach saurer Druckfarbe und anschließender Fixierung entweder mittels Passage durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des überklotzten Materials, — durchgeführt werden können, erhält man farbstarke Drucke mit gutem Stand der Konturen und einem klaren Weißfond. Der Ausfall der Drucke ist von wechselnden Fixierbedingungen nicht oder nur wenig abhängig. Sowohl in der Färberei als auch in der Druckerei sind die mit den erfindungsgemäßen Verbindungen erhaltenen Fixiergrade sehr hoch.

Neben dem üblichen Wasserdampf von 100-103 °C kann auch überhitzter Dampf und Druckdampf von Temperaturen bis zu 160 °C eingesetzt werden. Bei der Fixierung mittels Trockenhitze nach den üblichen Thermofixierverfahren verwendet man Heißluft von 120-200 °C.

Die Säurebindenden und die Fixierung der erfindungsgemäßen Verbindungen auf den Cellulosefasern bewirkenden Mittel sind beispielsweise wasserlösliche basische Salze der Alkalimetalle und ebenfalls Erdalkalimetalle von anorganischen und organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas und Trinatriumphosphat.

Durch die Behandlung der erfindungsgemäßen Verbindungen mit den säurebindenden Mitteln,

gegebenenfalls unter Wärmeeinwirkung, werden diese chemisch an die Cellulosefaser gebunden. Insbesondere die Cellulosefärbungen zeigen nach der üblichen Nachbehandlung durch Spülen zur Entfernung von nicht fixierten Anteilen sehr gute Fabrikations- und Gebrauchsechtheiten, wie insbesondere Naßechtheiten.

Für das coloristische Verhalten der erfindungsgemäßen Verbindungen ist besonders hervorzuheben, daß sie sich durch gute Stabilität in Druckpasten und Klotzflotten, auch in Anwesenheit von Alkali, durch ein sehr gutes Ziehvermögen aus langer Flotte, durch guten Farbaufbau nach üblichen Färbe- und Druckverfahren, durch eine gleiche Farbtiefe beim Färben von Baumwolle und Regeneratcellulosefasern, durch egales Warenbild der mit ihnen hergestellten Färbungen und Drucke und ebenfalls durch einen gleichmäßigen Ausfall der Färbungen aus langer Flotte bei Zugabe verschiedener Mengen an Elektrolyten auszeichnen. Nicht fixierte Farbstoffanteile lassen sich leicht auswaschen.

Die Färbungen auf Polyurethanfasern und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erzielen. Zwecks Erreichung einer guten Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Äthylenoxyd. In der Regel wird das zu färbende Material bei einer Temperatur von etwa 40 °C in das zuerst schwach alkalisch eingestellte Bad eingebracht, einige Zeit darin bewegt, das Färbebad auf einen schwach sauren, vorzugsweise schwach essigsauren pH-Wert eingestellt und die eigentliche Färbung bei einer Temperatur zwischen 30 und 105 °C, vorzugsweise zwischen 60 und 100 °C, durchgeführt.

Die erfindungsgemäßen Disazoverbindungen zeichnen sich durch einen hohen Fixiergrad bei dem Färben und Bedrucken von Fasermaterialien aus. Dies ist in der Praxis aus wirtschaftlichen energetischen und ökologischen Gründen von großem Nutzen, da die bessere Ausnutzung des angebotenen Farbstoffes gleichbedeutend ist mit einer energiesparenden, leichteren Auswaschbarkeit des verringerten, nicht fixierten Farbstoffanteiles und geringerer Abwasserbelastung.

Die mit den Disazoverbindungen der Formel (1) hergestellten Färbungen und Drucke zeichnen sich durch klare Nuancen aus. Insbesondere die Färbungen und Drucke aud Cellulosefasermaterialien besitzen, wie bereits erwähnt, eine hohe Farbstärke, darüber hinaus sehr gute Lichtechtheiten sowohl in trockenem als auch feuchtem Zustand, weiterhin sehr gute Waschechtheitseigenschaften bei Verwendung peroxidfreier oder -haltiger Waschmittel, Walk-, Wasser-, Seewasser- und Säureechtheiten, ebenso sehr gute Überfärbeechtheiten, wie insbesondere sehr gute saure Überfärbeechtheiten, und sehr gute Schweißechtheiten, desweiteren eine gute Plissierechtheit, Bügelechtheit und Reibechtheit sowie Abgasechtheit. Ebenso besitzen sie eine gute Beständigkeit gegenüber chloriertem Wasser (Chlorbadewasserechtheit) und gegenüber kupferionenabgebenden Stoffen ; sie sind daher bspw. mit Kupferkomplexfarbstoffen kombinierbar. Durch die Anwendung der erfindungsgemäßen Verbindungen zum Färben von Cellulosefasermaterialien wird keine Griffverhärtung des gefärbten Materials bewirkt.

Färbepasten, Klotzflotten und Färbeflotten sowie noch nicht fixierte Drucke und Klotzfärbungen der erfindungsgemäßen Verbindungen zeigen keine Empfindlichkeit gegen saure und schwefeldioxidhaltige Gase.

Die mit den erfindungsgemäßen Verbindungen hergestellten Färbungen besitzen marineblaue bis schwarze Farbtöne ; im künstlichen Licht zeigen sie in der Regel nicht den nachteiligen, unerwünschten Rotstich, der zur sog. « roten Abendfarbe » führt, da sie in der Regel eine geringfügig grünstichigere Nuance besitzen. Infolgedessen haben die erfindungsgemäßen Verbindungen in der Regel eine « neutrale » Abendfarbe, so daß bei den erfindungsgemäßen Disazoverbindungen es nicht erforderlich ist, diese mit einem geeigneten Nuancierfarbstoff zu verschneiden. Denn Farbstoffe mit einer ausgeprägten Nuancenverschiebung unter künstlichem Licht haben den Nachteil, daß zum einen ihre generelle Verwendbarkeit zur Herstellung von Färbungen beschränkt wird und daß zum anderen sich auch ihre Anwendung bei der Herstellung von Färbungen kompliziert, wenn Nuancierfarbstoffe zugesetzt werden müssen, um einigermaßen zufriedenstellende Färbungen zu erhalten, die künstlichem Licht ausgesetzt werden, so bei künstlichem Licht getragen werden oder ganz allgemein bei künstlichem Licht dem Gebrauch unterliegen.

Die nachstehenden Beispiele dienen zur Erläuterung der Erfindung. Die formelmäßig beschriebenen Verbindungen sind in Form der freien Säuren angegeben ; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

Die in den Beispielen genannten Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

Beispiel 1

a) Eine neutrale Lösung von 35,1 Teilen 3-β-Sulfatoäthylsulfonyl-anilin in 130 Teilen Wasser werden

unter gutem Rühren in ein Gemisch aus 24 Teilen Cyanurchlorid und 130 Teilen Eiswasser gegeben. Der pH des Reaktionsgemisches wird auf einen Wert von 4 bis 4,5 gestellt, und man hält den pH-Wert unter gutem fünf- bis sechsstündigem Rühren. Sodann gibt man diesen Ansatz unter Rühren zu einer neutralen Lösung von 19,8 Teilen 1,3-Diaminobenzol-4-sulfonsäure in 200 Teilen Eiswasser und rührt 10 Stunden bei einem pH-Wert von 5 bis 6 weiter.

b) Die hier unter a) hergestellte Lösung des sekundären Kondensationsproduktes wird auf eine Temperatur von 0 °C bis 5 °C abgekühlt, mit Salzsäure auf einen pH-Wert von 1 bis 2 gestellt und unter Rühren mit 13,5 Volumenteilen einer wäßrigen 40 %igen Natriumnitritlösung versetzt. In diese Diazoniumsalzlösung gibt man sodann portionsweise 27,1 Teile 1-Amino-8-naphthol-3,6-disulfonsäure und rührt bei einem pH-Wert von 1,5 bis 2 noch 10 bis 15 Stunden bis zur Beendigung der Kupplungsreaktion weiter.

c) Zu der hier unter b) hergestellten Lösung der Monoazoverbindung gibt man die wäßrige Suspension des analog bekannten Verfahrensweisen hergestellten Diazoniumsalzes aus 15,6 Teilen Anilin-4-sulfonsäure, stellt den pH-Wert dieses Kupplungsansatzes auf 6 bis 7 und rührt das Reaktionsgemisch bis zur Beendigung der Kupplung etwa 1 bis 2 Stunden.

Die Syntheselösung wird in üblicher Weise geklärt (Zusatz von Kieselgur und Filtration) und eingedampft oder sprühgetrocknet. Man erhält 180 Teile eines schwarzen Pulvers, das neben Elektrolytsalzen, wie Natriumchlorid, etwa 50 % des Alkalimetallsalzes, wie Natriumsalzes, der Verbindung der Formel

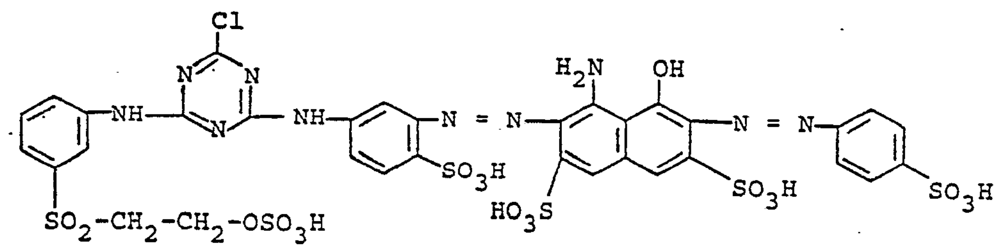

enthält. Diese erfindungsgemäße Disazoverbindung zeigt sehr gute faserreaktive Farbstoffeigenschaften und liefert nach den in der Technik für faserreaktive Farbstoffe üblichen Applikations- und Fixiermethoden auf den in der Beschreibung genannten Materialien, wie insbesondere Cellulosefasermaterialien, farbstarke marineblaue bis schwarze Färbungen und Drucke von guten bis sehr guten Gebrauchs- und Fabrikationsechtheiten, von denen insbesondere die Lichtechtheiten auf trockenem und feuchtem Fasermaterial, die Waschechtheiten (bei 60 und 95 °C), die Sodakoch-, Walk-, Seewasser-, Reib-, Abgas- und Bügelechtheiten sowie die Wasserechtheit (schwer) und die sauren Überfärbe- und Schweißechtheiten hervorgehoben werden können. Gegenüber kupferionenabgebenden Stoffen und gegen Chlorbadewasser ist die Nuance der Färbungen und Drucke weitgehend stabil.

Die hier erhaltene Syntheselösung der erfindungsgemäßen Disazoverbindung kann nach der Klärfiltration auch durch partielles Eindampfen in eine möglichst konzentrierte Lösung übergeführt werden, da die erfindungsgemäße Verbindung eine ausgezeichnete Wasserlöslichkeit besitzt. Man kann zu dieser Lösung vorteilhaft übliche Puffersubstanzen zur Stabilisierung eines pH-Wertes zwischen 3 und 7, weiterhin Dispergiermittel und übliche geeignete, mit Wasser mischbare Lösemittel, wie Sulfolan, Dimethylsulfoxid und Äthylenglykoldimethyläther, zusetzen. Die so gewonnenen konzentrierten Lösungen können anstelle der Pulver vorteilhaft zum Ansetzen der Färbelösungen und Druckpasten in der Färberei- und Druckereitechnik eingesetzt werden. Sie liefern in gleicher Güte die obengenannten marineblauen bis schwarzen Färbungen und Drucke.

## Beispiel 2

a) Zu einer neutralen Lösung von 31 Teilen 4-β-Sulfatoäthylsulfonyl-anilin in 120 Teilen Eiswasser gibt man unter gutem Rühren 16,5 Teile Cyanurfluorid innerhalb von 10 Minuten. Man rührt den Ansatz noch 30 Minuten bei einem pH-Wert von 2 bis 3,5 weiter und setzt sodann eine neutrale Lösung von 18,8 Teilen 1,3-Diaminobenzol-4-sulfonsäure in 200 Teilen Eiswasser hinzu ; der Ansatz wird noch einige Stunden bei einem pH-Wert zwischen 4,5 und 6 weitergerührt.

b) Sodann kühlt man die Lösung dieses sekundären Kondensationsproduktes auf eine Temperatur von 0 bis 5 °C ab, stellt sie mit verdünnter Schwefelsäure auf einen pH-Wert zwischen 1 und 1,5 und diazotiert unter Zugabe von 13,5 Volumenteilen einer wäßrigen 40 %igen Natriumnitritlösung. Dieser Diazotierungsansatz wird noch 3 Stunden lang weitergerührt und überschüssiges Nitrit, wie üblich, durch Zugabe von Amidosulfonsäure zerstört. Die so hergestellte Diazoniumsalzsuspension versetzt man mit 28,7 Teilen 1-Amino-8-naphthol-4,6-disulfonsäure und rührt diesen Kupplungsansatz bei einem pH-Wert von 1 bis 2 noch 10 Stunden weiter.

c) Die hier unter b) hergestellte Lösung der Monoazoverbindung wird mit der wäßrigen Lösung eines auf übliche Weise hergestellten Diazoniumsalzes aus 25,3 Teilen Anilin-2,5-disulfonsäure versetzt ; die Kupplungsreaktion wird bei einem pH-Wert zwischen 6 und 8 während etwa 1 bis 2 Stunden zu Ende

geführt und die erhaltene Lösung der erfindungsgemäßen Disazoverbindung anschließend auf einen pH-Wert von 5 gestellt. Sie wird in üblicher Weise geklärt und eingedampft oder sprühgetrocknet. Die erfindungsgemäße Disazoverbindung kann aus der Syntheselösung auch durch Kaliumchlorid ausgesalzen und isoliert werden.

Es wird ein blauschwarzes, elektrolythaltiges Pulver des Alkalimetallsalzes, wie Natrium- oder Kaliumsalzes, der Verbindung der Formel

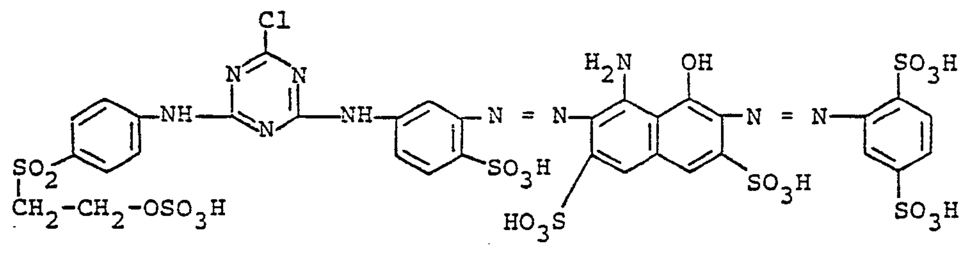

erhalten. Diese erfindungsgemäße Disazoverbindung zeigt sehr gute faserreaktive Farbstoffeigenschaften und liefert auf den in der Beschreibung genannten Materialien, wie insbesondere Cellulosefasermaterialien, nach den in der Technik, insbesondere für faserreaktive Farbstoffe, üblichen Applikations- und Fixiermethoden farbstarke rotstichig marineblaue bis schwarze Färbungen und Drucke mit hervorragenden Naßechtheitseigenschaften, wie beispielsweise einer sehr guten Waschechtheit bei 60 °C und 95 °C, einer sehr guten sauren Überfärbeechtheit, sehr guten Schweißechtheiten und einer sehr guten Abgasechtheit.

## Beispiele 3 bis 121

In den nachfolgenden Tabellenbeispielen sind weitere erfindungsgemäße Disazoverbindungen mit Hilfe ihrer Komponenten (die Phenylendiaminoverbindung der allgemeinen Formel (6), das Cyanurchlorid und die Aminoverbindung der allgemeinen Formel (5) als Komponenten der ersten Diazokomponente der allgemeinen Formel (4) sowie die Aminoverbindung $D-NH_2$ entsprechend der allgemeinen Formel (3) als 2. Diazokomponente und die 1-Amino-8-naphthol-3,6- und -4,6-disulfonsäure als bivalente Kupplungskomponente der Monoazoverbindung der obigen Formel (2), in dem Tabellenbeispiel durch die Stellung der einen 3-ständigen oder 4-ständigen Sulfogruppe charakterisiert), beschrieben. Sie lassen sich aus diesen Komponenten in erfindungsgemäßer Weise, beispielsweise analog den obigen Ausführungsbeispielen, herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheiten in dem in dem jeweiligen Tabellenbeispiel angegebenen Farbton.

(Siehe Tabelle Seite 9 ff.)

| Bsp. | Phenylen-diamin (6) | Aminoverbindung (5) | Stellung der einen Sulfogruppe | Aminoverbindung (3) der allg. Formel $D-NH_2$ | Farbton ist marineblau |
|---|---|---|---|---|---|
| 3 | 1,3-Diaminobenzol-4-sulfonsäure | 4-ß-Sulfatoäthyl-sulfonyl-anilin | 3 | 2,4-Disulfo-anilin | (grünstichig) |
| 4 | dito | dito | 3 | 2,5-Disulfo-anilin | (neutral) |
| 5 | dito | dito | 3 | 2-Sulfo-anilin | (neutral) |
| 6 | dito | dito | 3 | 3-Sulfo-anilin | (neutral) |
| 7 | dito | dito | 3 | 4-Chlor-2-sulfo-anilin | (neutral) |
| 8 | dito | dito | 3 | 4-Methoxy-2-sulfo-anilin | (grünstichig) |
| 9 | dito | dito | 3 | 2-Chlor-4-sulfo-anilin | (grünstichig) |
| 10 | dito | dito | 3 | 2,5-Dimethoxy-4-sulfo-anilin | (grünstichig) |
| 11 | dito | dito | 3 | 3-Carboxy-anilin | (neutral) |
| 12 | dito | dito | 3 | 4-Acetylamino-2-sulfo-anilin | (grünstichig) |

| Bsp. | Phenylen-diamin (6) | Aminoverbindung (5) | Stellung der einen Sulfogruppe | Aminoverbindung (3) der allg. Formel $D-NH_2$ | Farbton ist marineblau |
|---|---|---|---|---|---|
| 13 | 1,3-Diaminobenzol-4-sulfonsäure | 4-Vinylsulfonyl-anilin | 3 | 4-Sulfo-anilin | (grünstichig) |
| 14 | dito | dito | 3 | 2,4-Disulfo-anilin | (neutral) |
| 15 | dito | dito | 3 | 2,5-Disulfo-anilin | (grünstichig) |
| 16 | dito | dito | 4 | 4-Sulfo-anilin | (rotstichig) |
| 17 | dito | dito | 4 | 2,4-Disulfo-anilin | (neutral) |
| 18 | dito | dito | 4 | 2,5-Disulfo-anilin | (rotstichig) |
| 19 | dito | 4-ß-Sulfatoäthyl-sulfonyl-anilin | 4 | 4-Sulfo-anilin | (rotstichig) |
| 20 | dito | dito | 4 | 2-Carboxy-anilin | (rotstichig) |
| 21 | dito | dito | 4 | 2,4-Disulfo-anilin | (neutral) |
| 22 | dito | dito | 4 | 2,5-Disulfo-anilin | (rotstichig) |
| 23 | dito | dito | 4 | 2-Sulfo-anilin | (rotstichig) |
| 24 | dito | dito | 4 | 3-Sulfo-anilin | (rotstichig) |
| 25 | dito | dito | 4 | 4-Carboxy-anilin | (neutral) |
| 26 | dito | dito | 4 | 4-Chlor-2-sulfo-anilin | (neutral) |
| 27 | dito | dito | 4 | 4-Acetylamino-2-sulfo-anilin | (neutral) |

| Bsp. | Phenylen-diamin (6) | Aminoverbindung (5) | Stellung der einen Sulfogruppe | Aminoverbindung (3) der allg. Formel $D-NH_2$ | Farbton ist marineblau |
|---|---|---|---|---|---|
| 28 | 1,4-Diaminobenzol-2-sulfonsäure | 4-ß-Sulfatoäthyl-sulfonyl-anilin | 3 | 4-Sulfo-anilin | (grünstichig) |
| 29 | dito | dito | 3 | 2,5-Disulfo-anilin | (grünstichig) |
| 30 | dito | dito | 3 | 4-Sulfo-1-naphthylamin | (grünstichig) |
| 31 | dito | dito | 3 | 1,5-Disulfo-2-naphthyl-amin | (grünstichig) |
| 32 | dito | dito | 3 | 1,5,7-Trisulfo-2-naphthylamin | (grünstichig) |
| 33 | dito | dito | 3 | 2-Sulfo-anilin | (grünstichig) |
| 34 | 1,3-Diaminobenzol-4,6-disulfonsäure | dito | 3 | 4-Sulfo-anilin | (neutral) |
| 35 | dito | dito | 3 | 2,4-Disulfo-anilin | (grünstichig) |
| 36 | dito | dito | 3 | 2-Carboxy-anilin | (neutral) |
| 37 | dito | dito | 3 | 4-Carboxy-anilin | (grünstichig) |
| 38 | dito | dito | 3 | 2-Chlor-anilin | (neutral) |
| 39 | dito | dito | 3 | 4-Chlor-2-sulfo-anilin | (neutral) |

| Bsp. | Phenylen-diamin (6) | Aminoverbindung (5) | Stellung der einen Sulfogruppe | Aminoverbindung (3) der allg. Formel $D-NH_2$ | Farbton ist marineblau |
|---|---|---|---|---|---|
| 40 | 1,3-Diaminobenzol-4,6-disulfonsäure | 4-ß-Sulfatoäthyl-sulfonyl-anilin | 3 | 1-Sulfo-2-naphthylamin | (grünstichig) |
| 41 | dito | dito | 3 | 1,5-Disulfo-2-naphthyl-amin | (grünstichig) |
| 42 | dito | dito | 3 | 6-Sulfo-2-naphthylamin | (grünstichig) |
| 43 | dito | dito | 3 | 2,5-Dichlor-4-sulfo-anilin | (grünstichig) |
| 44 | dito | dito | 3 | 2,5-Dimethoxy-4-sulfo-anilin | (grünstichig) |
| 45 | 1,4-Diaminobenzol-2,5-disulfonsäure | dito | 3 | 4-Sulfo-anilin | (grünstichig) |
| 46 | dito | dito | 3 | 2-Carboxy-anilin | (grünstichig) |
| 47 | dito | dito | 3 | 4-Carboxy-anilin | (grünstichig) |
| 48 | dito | dito | 3 | 2-Chlor-anilin | (grünstichig) |
| 49 | dito | dito | 3 | 2-Sulfo-anilin | (grünstichig) |
| 50 | dito | dito | 3 | 4-Sulfo-1-naphthylamin | (grünstichig) |
| 51 | dito | dito | 3 | 1-Sulfo-2-naphthylamin | (grünstichig) |
| 52 | dito | dito | 3 | 6-Sulfo-2-naphthylamin | (grünstichig) |
| 53 | dito | dito | 3 | 1,5-Disulfo-2-naphthyl-amin | (grünstichig) |
| 54 | 1,4-Diaminobenzol-2,6-disulfonsäure | dito | 3 | 4-Sulfo-anilin | (grünstichig) |
| 55 | dito | dito | 3 | 2-Sulfo-anilin | (grünstichig) |
| 56 | dito | dito | 3 | 2-Carboxy-anilin | (grünstichig) |

| Bsp. | Phenylen-diamin (6) | Aminoverbindung (5) | Stellung der einen Sulfogruppe | Aminoverbindung (3) der allg. Formel $D-NH_2$ | Farbton ist marineblau |
|---|---|---|---|---|---|
| 57 | 1,4-Diaminobenzol-2,6-disulfonsäure | 4-ß-Sulfatoäthyl-sulfonyl-anilin | 3 | 2-Chlor-anilin | (grünstichig) |
| 58 | dito | dito | 3 | 4-Acetylamino-3-sulfo-anilin | (grünstichig) |
| 59 | dito | dito | 3 | 4-Sulfo-1-naphthylamin | (grünstichig) |
| 60 | dito | dito | 3 | 1-Sulfo-2-naphthylamin | (grünstichig) |
| 61 | dito | dito | 3 | 6-Sulfo-2-naphthylamin | (grünstichig) |
| 62 | dito | dito | 3 | 6,8-Disulfo-2-naphthyl-amin | (grünstichig) |
| 63 | dito | dito | 3 | 1,5-Disulfo-2-naphthyl-amin | (grünstichig) |
| 64 | 1,4-Diaminobenzol-2-sulfonsäure | dito | 4 | 4-Sulfo-anilin | (grünstichig) |
| 65 | dito | dito | 4 | 2,5-Disulfo-anilin | (grünstichig) |
| 66 | dito | dito | 4 | 2-Sulfo-anilin | (grünstichig) |
| 67 | dito | dito | 4 | 1,5-Disulfo-2-naphthyl-amin | (grünstichig) |
| 68 | dito | dito | 4 | 4-Sulfo-1-naphthylamin | (grünstichig) |
| 69 | dito | dito | 4 | 2-Sulfo-anilin | (grünstichig) |
| 70 | 1,3-Diaminobenzol-4,6-disulfonsäure | dito | 4 | 4-Sulfo-anilin | (rotstichig) |
| 71 | dito | dito | 4 | 4-Sulfo-1-naphthylamin | (neutral) |
| 72 | dito | dito | 4 | 1,5-Disulfo-2-naphthyl-amin | (neutral) |

| Bsp. | Phenylendiamin (6) | Aminoverbindung (5) | Stellung der einen Sulfogruppe | Aminoverbindung (3) der allg. Formel $D-NH_2$ | Farbton ist marineblau |
|---|---|---|---|---|---|
| 73 | 1,3-Diaminobenzol-4,6-disulfonsäure | 4-ß-Sulfatoäthylsulfonyl-anilin | 3 | 1-Sulfo-2-naphthylamin | (neutral) |
| 74 | dito | dito | 3 | 2,4-Disulfo-anilin | (rotstichig) |
| 75 | dito | dito | 3 | 2-Chlor-anilin | (rotstichig) |
| 76 | 1,4-Diaminobenzol-2,5-disulfonsäure | dito | 4 | 4-Sulfo-anilin | (grünstichig) |
| 77 | dito | dito | 4 | 3-Sulfo-anilin | (neutral) |
| 78 | dito | dito | 4 | 2-Sulfo-anilin | (neutral) |
| 79 | dito | dito | 4 | 1-Sulfo-2-naphthylamin | (grünstichig) |
| 80 | dito | dito | 4 | 1,5-Disulfo-2-naphthylamin | (grünstichig) |
| 81 | dito | dito | 4 | 2-Chlor-anilin | (neutral) |
| 82 | 1,4-Diaminobenzol-2,6-disulfonsäure | dito | 4 | 4-Sulfo-anilin | (neutral) |
| 83 | dito | dito | 4 | 2-Sulfo-anilin | (neutral) |
| 84 | dito | dito | 4 | 4-Sulfo-1-naphthylamin | (grünstichig) |
| 85 | dito | dito | 4 | 1,5-Disulfo-2-naphthylamin | (grünstichig) |
| 86 | 2,5-Diaminotoluol-4-sulfonsäure | dito | 3 | 4-Sulfo-anilin | (grünstichig) |
| 87 | dito | dito | 3 | 2-Sulfo-anilin | (grünstichig) |
| 88 | dito | dito | 3 | 1-Sulfo-2-naphthylamin | (grünstichig) |
| 89 | dito | dito | 3 | 1,5-Disulfo-2-naphthylamin | (grünstichig) |

| Bsp. | Phenylen-diamin (6) | Aminoverbindung (5) | Stellung der einen Sulfogruppe | Aminoverbindung (3) der allg. Formel $D-NH_2$ | Farbton ist marineblau |
|---|---|---|---|---|---|
| 90 | 2,4-Diaminotoluol-5-sulfonsäure | 4-ß-Sulfatoäthyl-sulfonyl-anilin | 3 | 4-Sulfo-anilin | (neutral) |
| 91 | dito | dito | 3 | 2,5-Disulfo-anilin | (neutral) |
| 92 | dito | dito | 3 | 1,5-Disulfo-2-naphthyl-amin | (neutral) |
| 93 | dito | dito | 3 | 3,6-Disulfo-2-naphthyl-amin | (neutral) |
| 94 | 2,5-Diaminoanisol-4-sulfonsäure | dito | 3 | 4-Sulfo-anilin | (grünstichig) |
| 95 | dito | dito | 3 | 1,5-Disulfo-2-naphthyl-amin | (grünstichig) |
| 96 | dito | dito | 3 | 2,5-Disulfo-anilin | (grünstichig) |
| 97 | dito | dito | 3 | 2,4-Disulfo-anilin | (grünstichig) |
| 98 | 2,4-Diaminoanisol-5-sulfonsäure | dito | 3 | 4-Sulfo-anilin | (neutral) |
| 99 | dito | dito | 3 | 1,5-Disulfo-2-naphthyl-amin | (neutral) |
| 100 | dito | dito | 3 | 1,5,7-Trisulfo-2-naphthylamin | (grünstichig) |
| 101 | 1,3-Diaminobenzol-4-sulfonsäure | 3-ß-Sulfatoäthyl-sulfonyl-anilin | 3 | 4-Sulfo-anilin | (neutral) |
| 102 | dito | dito | 3 | 2-Sulfo-anilin | (neutral) |
| 103 | dito | dito | 3 | 2,4-Disulfo-anilin | (neutral) |
| 104 | dito | dito | 3 | 2,5-Disulfo-anilin | (neutral) |

| Bsp. | Phenylen-diamin (6) | Aminoverbindung (5) | Stellung der einen Sulfogruppe | Aminoverbindung (3) der allg. Formel $D-NH_2$ | Farbton ist marineblau |
|---|---|---|---|---|---|
| 105 | 1,3-Diaminobenzol-4-sulfonsäure | 2-Methoxy-4-(ß-sulfatoäthylsulfonyl)-anilin | 3 | 4-Sulfo-anilin | (neutral) |
| 106 | dito | dito | 3 | 2,5-Disulfo-anilin | (neutral) |
| 107 | dito | 2-Methoxy-5-(ß-sulfatoäthylsulfonyl)-anilin | 3 | 2-Sulfo-anilin | (neutral) |
| 108 | dito | dito | 3 | 2,4-Disulfo-anilin | (neutral) |
| 109 | dito | 2-Methoxy-5-methyl-4-(ß-sulfatoäthylsulfonyl)-anilin | 3 | 4-Sulfo-anilin | (neutral) |
| 110 | dito | dito | 3 | 2,5-Disulfo-anilin | (neutral) |

| Bsp. | Phenylendiamin (6) | Aminoverbindung (5) | Stellung der einen Sulfogruppe | Aminoverbindung (3) der allg. Formel $D-NH_2$ | Farbton ist marineblau |
|---|---|---|---|---|---|
| 111 | 1,3-Diaminobenzol-4-sulfonsäure | 2,5-Dimethoxy-4-(ß-sulfatoäthylsulfonyl)-anilin | 3 | 2-Sulfo-anilin | (neutral) |
| 112 | dito | dito | 3 | 4-Sulfo-anilin | (neutral) |
| 113 | dito | dito | 3 | 2,5-Disulfo-anilin | (neutral) |
| 114 | dito | 2-Methoxy-5-chlor-4-(ß-sulfatoäthylsulfonyl)-anilin | 3 | 2-Sulfo-anilin | (neutral) |
| 115 | dito | dito | 3 | 2,5-Disulfo-anilin | (neutral) |
| 116 | dito | 4-Methoxy-5-(ß-sulfatoäthylsulfonyl)-anilin | 3 | 4-Sulfo-anilin | (neutral) |
| 117 | dito | dito | 3 | 2-Sulfo-anilin | (neutral) |
| 118 | dito | dito | 3 | 2,5-Disulfo-anilin | (neutral) |
| 119 | dito | 2-Methoxy-5-(ß-sulfatoäthylsulfonyl)-anilin | 4 | 2-Sulfo-anilin | (neutral) |
| 120 | dito | dito | 4 | 2,4-Disulfo-anilin | (neutral) |
| 121 | dito | 2-Methoxy-5-vinylsulfonyl-anilin | 4 | 2,5-Disulfo-anilin | (rotstichig) |

## Patentansprüche

1. Wasserlösliche Disazoverbindungen der allgemeinen Formel (1)

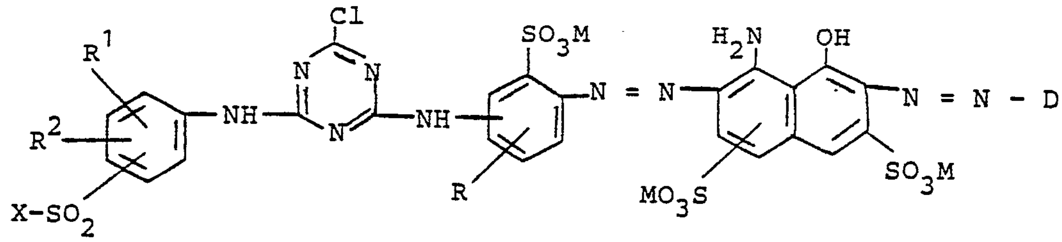

(1)

in welcher die Formelglieder $R^1$, $R^2$, R und die Substituenten in D zueinander gleiche oder voneinander verschiedene Bedeutungen besitzen können und

D der Phenylrest ist, der durch 1, 2 oder 3 Substituenten aus der Gruppe Alkyl von 1 bis 4 C-Atomen, Alkoxy von 1 bis 4 C-Atomen, Halogen, Trichlormethyl, Trifluormethyl, Nitro, Alkanoylamino mit 1 bis 4 C-Atomen im Alkylrest, Benzoylamino (das im Benzolkern durch einen oder zwei Substituenten aus der Gruppe Methyl, Äthyl, Methoxy, Äthoxy, Chlor und Sulfo substituiert sein kann), Phenylsulfonylamino (das durch einen oder zwei Substituenten aus der Gruppe Methyl, Äthyl, Methoxy und Äthoxy substituiert sein kann), Carboxy und Sulfo substituiert sein kann, wobei dieser Phenylrest D bevorzugt mindestens eine Sulfogruppe oder Carboxygruppe als Substituenten enthält, oder

D ein Naphthylrest ist, der durch 1, 2 oder 3 Sulfogruppen substituiert ist,

$R^1$ und $R^2$ jedes ein Wasserstoffatom, eine Alkylgruppe von 1 bis 4 C-Atomen, eine Alkoxygruppe von 1 bis 4 C-Atomen oder ein Chloratom bedeuten,

R ein Wasserstoffatom oder eine Alkylgruppe von 1 bis 4 C-Atomen, eine Alkoxygruppe von 1 bis 4 C-Atomen oder eine Sulfogruppe ist, R jedoch zwingend eine Alkylgruppe von 1 bis 4 C-Atomen oder eine Alkoxygruppe von 1 bis 4 C-Atomen oder eine Sulfogruppe ist, wenn die Aminogruppe —NH— an diesen Benzolkern in para-Stellung zur angegebenen Sulfogruppe —$SO_3M$ gebunden ist und D gleichzeitig einen durch Sulfo substituierten Naphthylrest bedeutet,

X die Vinylgruppe oder eine β-Sulfatoäthyl-Gruppe ist und

M ein Wasserstoffatom oder das Äquivalent eines Metalls bedeutet.

2. Disazoverbindungen nach Anspruch 1 der dort angegebenen und definierten allgemeinen Formel (1), dadurch gekennzeichnet, daß D ein Phenylrest ist, der durch einen, zwei oder drei Substituenten substituiert ist, die aus der Menge von 2 Alkoxygruppen von 1 bis 4 C-Atomen, 2 Alkylgruppen von 1 bis 4 C-Atomen, 2 Chloratomen, 1 Bromatom, 1 Fluoratom, 1 Trichlormethylgruppe, 1 Trifluormethylgruppe, 1 Alkanoylaminogruppe mit 1 bis 4 C-Atomen im Alkylrest, 1 Nitrogruppe, 1 Carboxygruppe und 2 Sulfogruppen ausgewählt sind.

3. Disazoverbindungen nach Anspruch 1 der dort angegebenen und definierten allgemeinen Formel (1), dadurch gekennzeichnet, daß D der Phenylrest ist, der durch 1, 2 oder 3 Substituenten substituiert ist, die aus der Menge von 2 Alkoxygruppen, 2 Chloratomen, 2 Sulfogruppen, 1 Carboxygruppe, 1 Nitrogruppe, 1 Alkylgruppe von 1 bis 4 C-Atomen und 1 Acetylaminogruppe ausgewählt sind.

4. Disazoverbindungen nach Anspruch 1 der dort angegebenen und definierten allgemeinen Formel (1), dadurch gekennzeichnet, daß D der Phenylrest ist, der durch eine oder zwei Sulfogruppen substituiert ist.

5. Disazoverbindungen nach Anspruch 1 der dort angegebenen und definierten allgemeinen Formel (1), dadurch gekennzeichnet, daß D ein Naphthylrest ist, der durch 1, 2 oder 3 Sulfogruppen substituiert ist, und daß die Aminogruppe —NH— an den Benzolkern in para-Stellung zur Azogruppe gebunden ist.

6. Disazoverbindungen nach einem der Ansprüche 1 bis 5, dadurch gekennzeichnet, daß hier $R^1$ ein Wasserstoffatom, die Methylgruppe, die Methoxygruppe oder ein Chloratom und $R^2$ ein Wasserstoffatom, die Methylgruppe oder die Methoxygruppe ist.

7. Disazoverbindungen nach einem der Ansprüche 1 bis 6, dadurch gekennzeichnet, daß R eine Sulfogruppe ist.

8. Disazoverbindungen nach Anspruch 1 der Formel

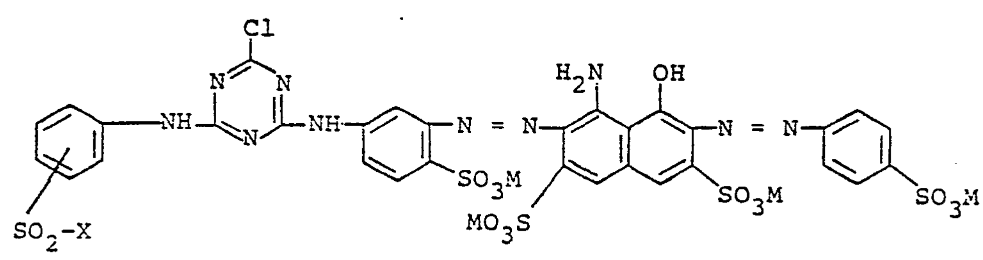

in welcher $-SO_2-X$ in m- oder p-Stellung gebunden ist und M und X die in Anspruch 1 genannten Bedeutungen haben.

9. Disazoverbindungen nach einem der Ansprüche 1 bis 8, dadurch gekennzeichnet, daß die Gruppe $-SO_2-X$ in para-Stellung zur Aminogruppe an den Benzolkern gebunden ist.

10. Disazoverbindungen nach Anspruch 1 der Formel

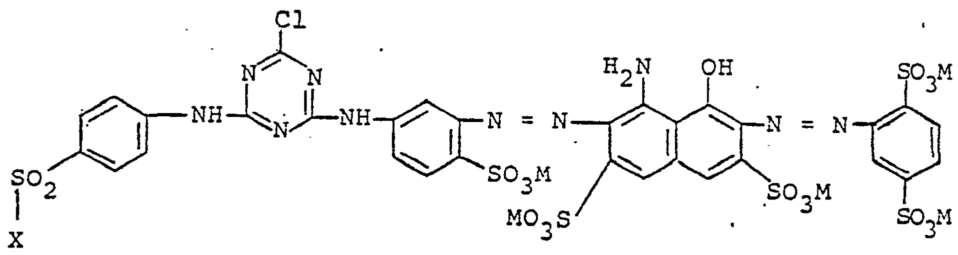

in welcher M und X die in Anspruch 1 genannten Bedeutungen haben.

11. Disazoverbindungen nach Anspruch 1 der Formel

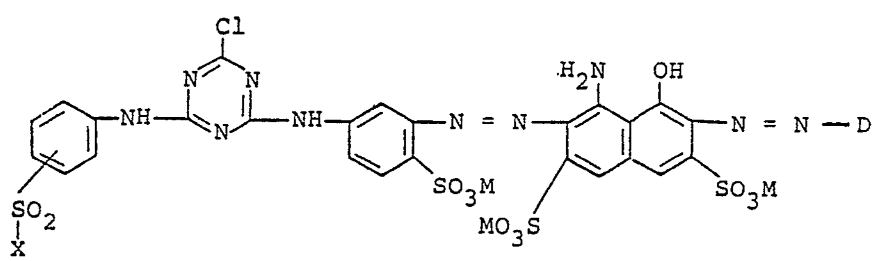

in welcher X und M die in Anspruch 1 genannten Bedeutungen haben und D der 4-Sulfophenyl-Rest ist.

12. Disazoverbindungen nach Anspruch 11, dadurch gekennzeichnet, daß D der 2,4-Disulfophenyl-Rest ist.

13. Disazoverbindungen nach einem der Ansprüche 1 bis 4, in welchen D der definierte, gegebenenfalls substituierte Phenylrest ist und R für ein Wasserstoffatom steht.

14. Disazoverbindungen nach Anspruch 5, dadurch gekennzeichnet, daß R ein Wasserstoffatom bedeutet.

15. Disazoverbindungen nach einem der Ansprüche 1 bis 14, dadurch gekennzeichnet, daß der Formelrest X eine β-Sulfatoäthyl-Gruppe ist.

16. Disazoverbindungen nach einem der Ansprüche 1 bis 14, dadurch gekennzeichnet, daß der Formelrest X eine Vinylgruppe ist.

17. Disazoverbindungen nach einem der Ansprüche 1 bis 16, dadurch gekennzeichnet, daß M hier Wasserstoff, Natrium oder Kalium ist.

18. Verfahren zur Herstellung der Disazoverbindungen von Anspruch 1, dadurch gekennzeichnet, daß man eine Monoazoverbindung der allgemeinen Formel (2)

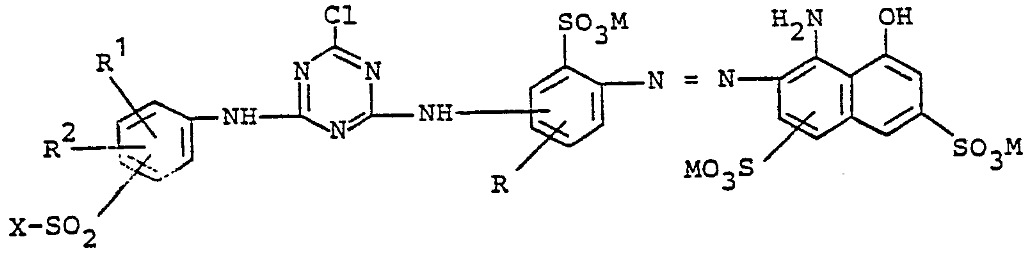

(2)

in welcher $R^1$, $R^2$, R, D, M und X die in Anspruch 1 genannten bedeutungen haben, mit dem Diazoniumsalz einer Aminoverbindung der allgemeinen Formel (3)

$$H_2N-D \quad (3)$$

in welcher D die in Anspruch 1 genannte Bedeutung besitzt, kuppelt.

19. Verwendung der in Anspruch 1 genannten und definierten Disazoverbindungen als Farbstoffe zum Färben von hydroxy- und/oder carbonamidgruppenhaltigem Material, insbesondere Fasermaterial.

**Claims**

1. Water-soluble disazo compounds of the general formula (1)

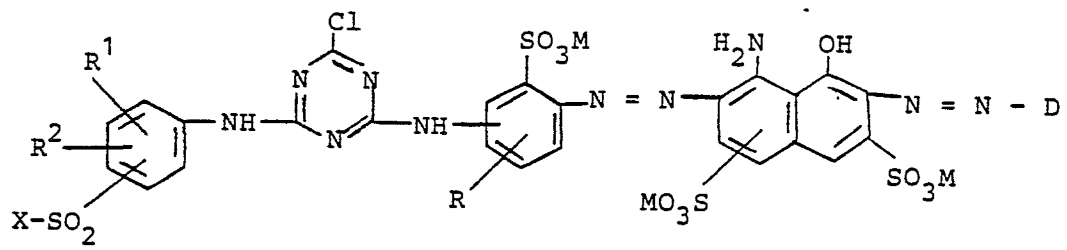

(1)

in which the formula radicals $R^1$, $R^2$, R and the substituents in D may have meanings which are identical to or different from each other, and in which

D is a phenyl radical which may be substituted by 1, 2 or 3 substituents from the group of alkyl of 1 to 4 C-atoms, alkoxy of 1 to 4 C-atoms, halogen, trichloromethyl, trifluoromethyl, nitro, alkanoylamino having 1 to 4 C-atoms in the alkyl radical, benzoylamino (which may be substituted in the benzene nucleus by one or two substituents from the group of methyl, ethyl, methoxy, ethoxy chlorine and sulfo), phenylsulfonylamino (which may be substituted by one or two substituents the group of methyl, ethyl, methoxy and ethoxy), carboxy and sulfo, where this phenyl radical D preferably contains at least one sulfo group or carboxy group as substituents, or

D is a naphthyl radical which is substituted by 1, 2 or 3 sulfo groups,

$R^1$ and $R^2$ denote each a hydrogen atom, an alkyl group of 1 to 4 C-atoms, an alkoxy group of 1 to 4 C-atoms or a chlorine atom,

R is a hydrogen atom or an alkyl group of 1 to 4 C-atoms, an alkoxy group of 1 to 4 C-atoms or a sulfo group, however, R is mandatorily an alkyl group of 1 to 4 C-atoms or an alkoxy group of 1 to 4 C-atoms or a sulfo group if the amino group —NH— is bonded to this benzene nucleus in the para-position relative to the shown sulfo group $—SO_3M$ and D is, at the same time, a sulfo-substituted naphthyl radical,

X is the vinyl group or a β-sulfatoethyl group and

M denotes a hydrogen atom or the equivalent of a metal.

2. Disazo compounds according to claim 1 of the general formula (1) given and defined there, characterized by that D is a phenyl radical which is substituted by one, two or three substituents which are selected from the set of groups consisting of 2 alkoxy groups of 1 to 4 C-atoms, 2 alkyl groups of 1 to 4 C-atoms, 2 chlorine atoms, 1 bromine atom, 1 fluorine atom, 1 trichloromethyl group, 1 trifluoromethyl group, 1 alkanoylamino group having 1 to 4 C-atoms in the alkyl radical, 1 nitro group, 1 carboxy group and 2 sulfo groups.

3. Disazo compounds according to claim 1 of the general formula (1) given and defined there, characterized by that D is the phenyl radical which is substituted by 1, 2 or 3 substituents which are selected from the set of groups consisting of 2 alkoxy groups, 2 chlorine atoms, 2 sulfo groups, 1 carboxy group, 1 nitro group, 1 alkyl group of 1 to 4 carbon atoms and 1 acetylamino group.

4. Disazo compounds according to claim 1 of the general formula (1) given and defined there, characterized by that D is the phenyl radical which is substituted by one or two sulfo groups.

5. Disazo compounds according to claim 1 of the general formula (1) given and defined there, characterized by that D is a naphthyl radical which is substituted by 1, 2 or 3 sulfo groups, and that the amino group —NH— is bonded to the benzene nucleus in the para-position relative to the azo group.

6. Disazo compounds according to any of claims 1 to 5, characterized by that $R^1$ is a hydrogen atom, the methyl group, the methoxy group or a chlorine atom and $R^2$ is a hydrogen atom, the methyl group or the methoxy group.

7. Disazo compounds according to any of claims 1 to 6, characterized by that R is a sulfo group.

8. Disazo compounds according to claim 1 of the formula

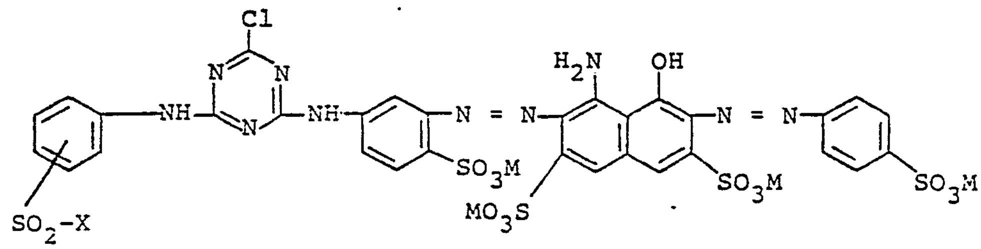

in which $—SO_2—X$ is bonded in the m- or p-position and M and X have the meanings mentioned in claim 1.

9. Disazo compounds according to any of claims 1 to 8, characterized by that the group $—SO_2—X$ is bonded to the benzene nucleus in para-position relative to the amino group.

10. Disazo compounds according to claim 1 of the formula

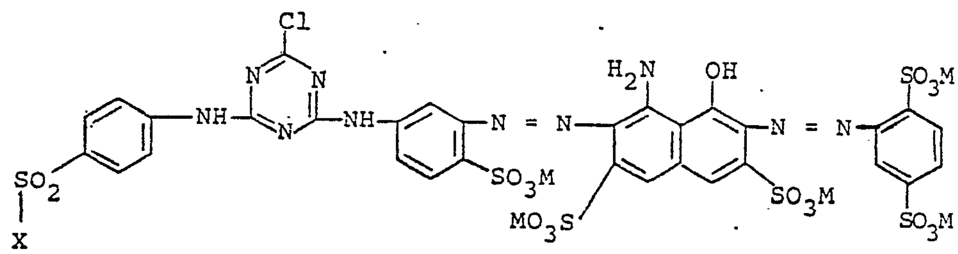

in which M and X have the meanings mentioned in claim 1.

11. Disazo compounds accordings to claim 1 of the formula

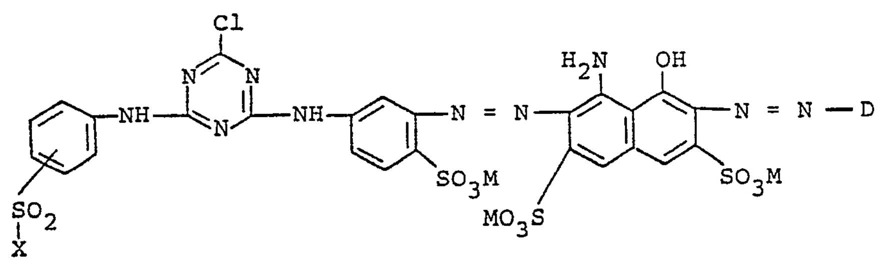

in which X and M have the meanings mentioned in claim 1 and D is the 4-sulfophenyl group.

12. Disazo compounds according to claim 11, characterized by that D is the 2,4-disulfophenyl group.

13. Disazo compounds according to any of claim 1 to 4, in which D is the optionally substituted phenyl radical as defined and R is a hydrogen atom.

14. Disazo compounds according to claim 5, characterized by that R is a hydrogen atom.

15. Disazo compounds according to any of claims 1 to 14, characterized by that the formula moiety X is a β-sulfatoethyl group.

16. Disazo compounds according to any of claims 1 to 14, characterized by that the formula moiety X is a vinyl group.

17. Disazo compounds any of claims 1 to 16, characterized by that M is hydrogen, sodium or potassium.

18. A process for the preparation of disazo compounds of claim 1, characterized by that a monoazo compound of the general formula (2)

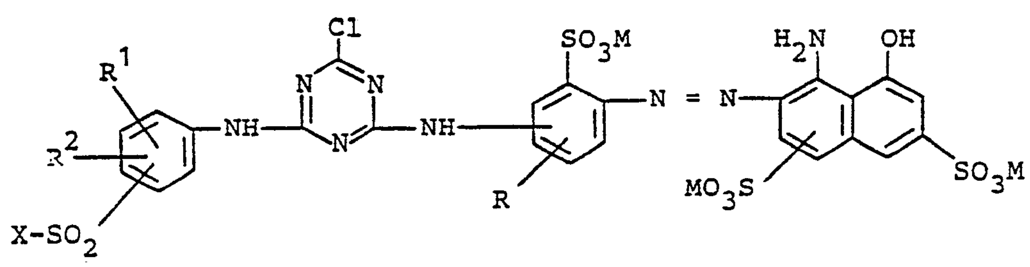

(2)

in which $R^1$, $R^2$, R, D, M and X have the meanings mentioned in claim 1 is coupled with the diazonium salt of an amino compound of the general formula (3)

$$H_2N—D \qquad (3)$$

in which D has the meanings mentioned in claim 1.

19. The use of disazo compounds mentioned and defined in claim 1, as dyestuffs for dyeing hydroxy- and/or carboxamide-containing material, in particular fiber material.

**Revendications**

1. Composés disazoïques hydrosolubles, de formule générale (1) :

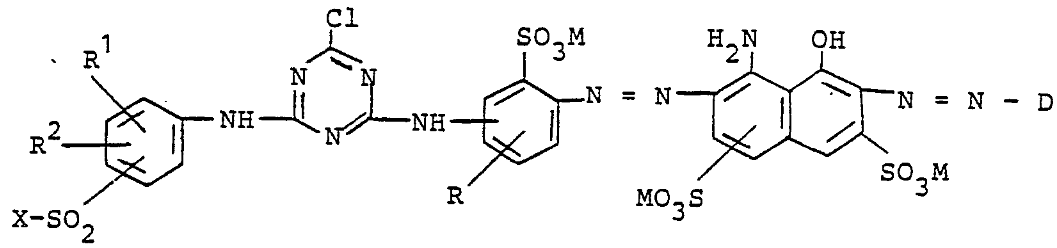

(1)

dans laquelle les symboles $R^1$, $R^2$, R et les substituants de D peuvent posséder des significations identiques ou différentes, et

D représente le reste phényle (qui peut être substitué par un, deux ou trois substituants choisis parmi un groupe alkyle ayant 1 à 4 atomes de carbone, alcoxy ayant 1 à 4 atomes de carbone, halogéno, trichlorométhyle, trifluorométhyle, nitro, alcanoylamino ayant 1 à 4 atomes de carbone dans le reste alkyle, benzoylamino (qui peut être substitué dans le noyau benzénique par un ou deux substituants choisis parmi un groupe méthyle, éthyle, méthoxy, éthoxy, chloro et sulfo), un groupe phénylsulfonylamino (qui peut être substitué par un ou deux substituants choisis parmi un groupe méthyle, éthyle, méthoxy et éthoxy), un groupe carboxy et sulfo, ce reste phényle D contenant de préférence au moins un groupe sulfo ou un groupe carboxy comme substituant, ou

D représente un reste naphtyle, qui est substitué par un, deux ou trois groupes sulfo,

$R^1$ et $R^2$ représentent chacun un atome d'hydrogène, un groupe alkyle ayant 1 à 4 atomes de carbone, un groupe alcoxy ayant 1 à 4 atomes de carbone ou un atome de chlore,

R représente un atome d'hydrogène ou un groupe alkyle ayant 1 à 4 atomes de carbone, un groupe alcoxy ayant 1 à 4 atomes de carbone ou un groupe sulfo, R devant cependant obligatoirement représenter un groupe alkyle ayant 1 à 4 atomes de carbone ou un groupe alcoxy ayant 1 à 4 atomes de carbone ou un groupe sulfo quand le groupe amino-NH— est fixé sur ce noyau benzénique en position para par rapport au groupe sulfo-$SO_3M$ indiqué et D représente simultanément un reste naphtyle substitué par un groupe sulfo,

X représente le groupe vinyle ou un groupe sulfato-2 éthyle, et

M représente un atome d'hydrogène ou l'équivalent d'un métal.

2. Composés disazoïques selon la revendication 1, répondant à la formule générale (1) qui y est indiquée et définie, caractérisés en ce que D est un reste phényle qui est substitué par un, deux ou trois substituants choisis parmi deux groupes alcoxy ayant 1 à 4 atomes de carbone, deux groupes alkyles ayant 1 à 4 atomes de carbone, 2 atomes de chlore, 1 atome de brome, 1 atome de fluor, un groupe trichlorométhyle, un groupe trifluorométhyle, un groupe alcanoylamino ayant 1 à 4 atomes de carbone dans le reste alkyle, un groupe nitro, un groupe carboxyle et deux groupes sulfo.

3. Composés disazoïques selon la revendication 1, répondant à la formule générale (1) qui y est indiquée et définie, caractérisés en ce que D représente le reste phényle qui est substitué par un, deux ou trois substituants choisis parmi deux groupes alcoxy, 2 atomes de chlore, deux groupes sulfo, un groupe carboxy, un groupe nitro, un groupe alkyle ayant 1 à 4 atomes de carbone et un groupe acétylamino.

4. Composés disazoïques selon la revendication 1, répondant à la formule générale (1) qui y est indiquée et définie, caractérisés en ce que D représente le reste phényle qui est substitué par un ou deux groupes sulfo.

5. Composés disazoïques selon la revendication 1, répondant à la formule générale (1) qui y est indiquée et définie, caractérisés en ce que D est un reste naphtyle qui est substitué par un, deux ou trois groupes sulfo, et en ce que le groupe amino —NH— est fixé sur le noyau benzénique en position para par rapport au groupe azoïque.

6. Composés disazoïques selon l'une des revendications 1 à 5, caractérisés en ce que $R^1$ représente un atome d'hydrogène, le groupe méthyle, le groupe méthoxy ou un atome de chlore et $R^2$ représente un atome d'hydrogène, le groupe méthyle ou le groupe méthoxy.

7. Composés disazoïques selon l'une des revendications 1 à 6, caractérisés en ce que R représente un groupe sulfo.

8. Composés disazoïques selon la revendication 1, de formule :

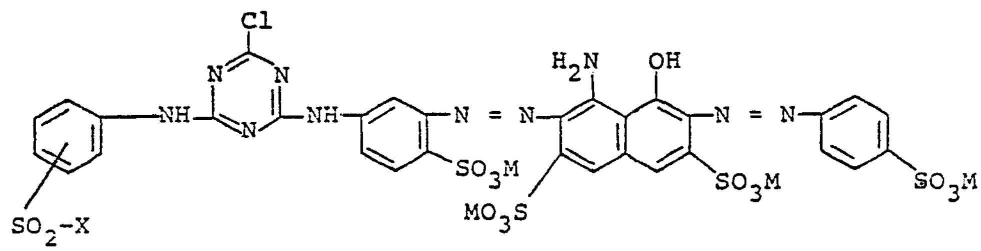

dans laquelle —$SO_2X$ est fixé en méta ou para et M et X ont les sens indiqués à la revendication 1.

9. Composés disazoïques selon l'une des revendications 1 à 8, caractérisés en ce que le groupe —$SO_2$—X est fixé en position para par rapport au groupe amino sur le noyau benzénique.

10. Composés disazoïques selon la revendication 1, de formule :

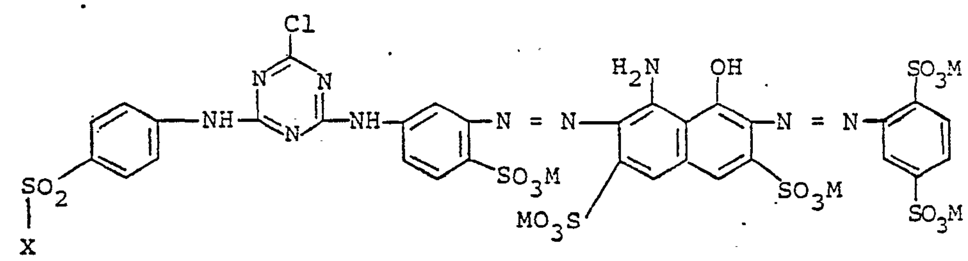

dans laquelle M et X ont les sens indiqués à la revendication 1.

11. Composés disazoïques selon la revendication 1, de formule :

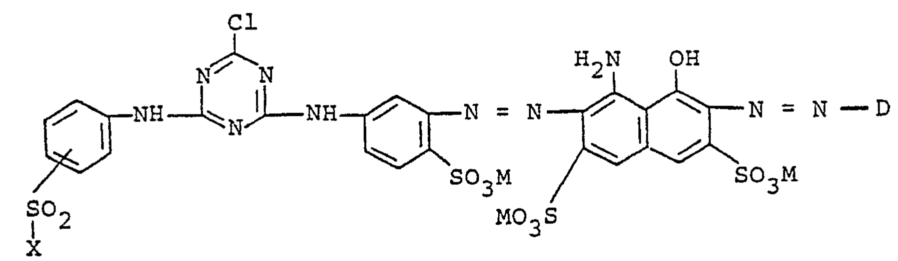

dans laquelle X et M ont les sens indiqués à la revendication 1, et D représente le reste sulfo-4 phényle.

12. Composés disazoïques selon la revendication 11, caractérisés en ce que D représente le reste disulfo-2,4 phényle.

13. Composés disazoïques selon l'une des revendications 1 à 4, dans lesquels D représente le reste phényle qui est défini, éventuellement substitué, et R représente un atome d'hydrogène.

14. Composés disazoïques selon la revendication 5, caractérisés en ce que R représente un atome d'hydrogène.

15. Composés disazoïques selon l'une des revendications 1 à 14, caractérisés en ce que le symbole X représente un groupe sulfato-2 éthyle.

16. Composés disazoïques selon l'une des revendications 1 à 14, caractérisés en ce que le symbole X représente un groupe vinyle.

17. Composés disazoïques selon l'une des revendications 1 à 16, caractérisés en ce que M représente un atome d'hydrogène, de sodium ou de potassium.

18. Procédé pour préparer les composés disazoïques de la revendication 1, caractérisé en ce qu'on copule un composé monoazoïque de formule générale (2) :

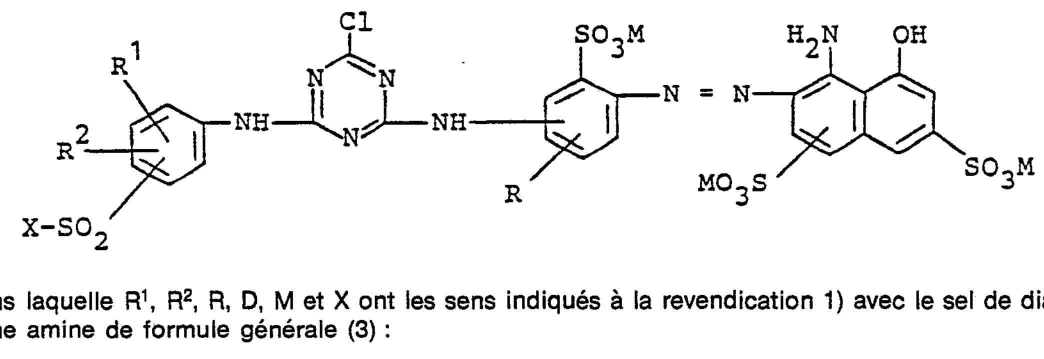

(2)

(dans laquelle $R^1$, $R^2$, R, D, M et X ont les sens indiqués à la revendication 1) avec le sel de diazonium d'une amine de formule générale (3) :

$$H_2N—D \qquad (3)$$

dans laquelle D a le sens indiqué à la revendication 1.

19. Utilisation des composés disazoïques, cités et définis à la revendication 1, comme colorants pour teindre une matière, en particulier une matière fibreuse, contenant des groupes hydroxyles et/ou carboxamides.